# EUROPÄISCHE PATENTSCHRIFT

(11) **EP 0 578 660 B1**
(45) Veröffentlichungstag und Bekanntmachung des Hinweises auf die Patenterteilung: **04.12.1996**
(21) Anmeldenummer: 92906874.0
(22) Anmeldetag: 25.03.1992
(51) Int. Cl.: C09B 23/06, G11B 7/24, C09B 23/02

(54) **INDOLIZINTRIMETHINFARBSTOFFE**
INDOLICIN TRIMETHINE DYE
COLORANTS A LA TRIMETHINE D'INDOLICINE

(30) Priorität: 04.04.1991 DE 4110808
(43) Veröffentlichungstag der Anmeldung: 19.01.1994
(73) Patentinhaber: BASF Aktiengesellschaft, 67063 Ludwigshafen (DE)
(72) Erfinder: ACKER, Michael, D-6900 Heidelberg (DE); ALBERT, Bernard, D-6701 Maxdorf (DE); SCHMITT, Michael, D-67549 Worms (DE)
(86) Internationale Anmeldenummer: EP9200660
(87) Internationale Veröffentlichungsnummer: WO9217548

(56) Entgegenhaltungen:
- DE-A- 1 963 045
- FR-A- 1 295 754
- ADVANCES IN HETEROCYCLIC CHEMISTRY Bd. 23, 1978, LONDON, GB, Seiten 104-170; F.J. SWINBOURNE et al: "Advances in Indolizine Chemistry"

## Beschreibung

Die vorliegende Erfindung betrifft neue Indolizintrimethinfarbstoffe der allgemeinen Formel I 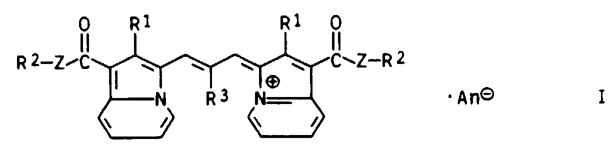 in welcher die Variablen folgende Bedeutung haben:
- R¹: C₁-C₂₂-Alkylgruppen, die folgende Substituenten tragen können: Halogen, Hydroxy, C₁-C₆-Alkoxy, Benzyloxy, C₁-C₆-Alkanoyl, C₁-C₆-Alkoxycarbonyl oder Phenyl; C₃-C₇-Cycloalkylgruppen, die folgende Substituenten tragen können: Halogen, C₁-C₄-Alkyl oder C₁-C₄-Alkoxy; Phenylgruppen, die folgende Substituenten tragen können: Halogen, Hydroxy, Cyano, C₁-C₆-Alkyl, C₁-C₆-Alkoxy, Carboxy, C₁-C₆-Alkoxycarbonyl oder Hydroxysulfonyl;
- R₂: einer der Reste R¹, wobei die C-Kette der C₁-C₂₂-Alkyl-gruppen durch ein bis fünf Sauerstoffatome in Etherfunktion unterbrochen sein kann;
- R₃: Wasserstoff, Halogen oder C₁-C₆-Alkyl;
- Z: -O- oder -NH-;
- An^{⊖}: das Äquivalent eines Säureanions,
sowie optische Aufzeichnungsmedien, welche die Farbstoffe I enthalten.

Aufzeichnungsmedien, die durch energiereiche Bestrahlung eine lokal begrenzte Zustandsänderung erfahren, sind bekannt. Mit dieser thermisch ausgelösten Zustandsänderung, z.B. Verdampfen, Änderung des Fließverhaltens oder Ausbleichen, ist eine Änderung der optischen Eigenschaften, beispielsweise der Absorption durch Verschiebung des Absorptionsmaximums oder der Extinktion verbunden, die zur Informations- oder Datenaufzeichnung ausgenutzt werden kann.

Als Lichtquellen zur optischen Aufzeichnung eignen sich u.a. Halbleiterlaser, die Licht im nahen Infrarot emittieren. Besonders zu nennen sind hierbei Festkörper-Injektionslaser, vor allem der AlGaAs-Laser, der im Wellenlängenbereich von etwa 700 bis 900 nm emittiert.

Die Verwendung dieses Lasers ist aufgrund der geringen Größe des Bauelements, seines geringen Energiebedarfs und der Möglichkeit der direkten Modulation der optischen Ausgangsleistung durch Modulation des elektrischen Antriebsstromes besonders vorteilhaft.

An die verwendeten Aufzeichnungsmedien sind folgende Anforderungen zu stellen: Die in den Medien enthaltenen Farbstoffe sollen im gewünschten Wellenlängenbereich hohe Absorption aufweisen, sie sollen technisch leicht zugänglich und gegen äußere Einflüsse stabil sein und sich in Alkoholen und Polymeren leicht lösen, so daß sie beispielsweise nach dem Spin-Coating-Verfahren zu dünnen, homogenen Farbstoffschichten hoher Grundreflektivität verarbeitet werden können, die gut auf den gebräuchlichen Trägermaterialien haften. Die Aufzeichnungsmedien sollen zudem mittels eines Halbleiterlasers beschreibbar und anschließend gut lesbar sein und sich durch ein möglichst hohes Signal/Rausch-Verhältnis auszeichnen.

Die bislang für optische Aufzeichnungsmedien verwendeten Farbstoffe weisen häufig Mängel in einem der genannten Anforderungspunkte auf. Dies gilt auch für die aus den JP-A-227 693/1987 und DE-A-39 28 758 bekannten Indolizintrimethinfarbstoffe, die sich von den Verbindungen I vor allem durch die Art der Substituenten in 3-Stellung des Indolizinringes unterscheiden.

Der Erfindung lag daher die Aufgabe zugrunde, für optische Aufzeichnungsmedien geeignete Farbstoffe zu finden, die dem geforderten Eigenschaftsprofil besonders nahekommen.

Demgemäß wurden die eingangs definierten Indolizintrimethinfarbstoffe I gefunden.

Weiterhin wurden optische Aufzeichnungsmedien für die Aufzeichnung und Wiedergabe von Informationen mittels Laserstrahlen gefunden, welche diese Farbstoffe in der gegen Laserlicht empfindlichen Schicht enthalten.

Bevorzugte Ausgestaltungen der Erfindung sind den Unteransprüchen zu entnehmen.

Geeignete Reste R¹ oder R² sind dabei C₁-C₂₂-Alkylgruppen wie Methyl, Ethyl, Propyl, Isopropyl, Butyl, Isobutyl, sec.-Butyl, tert.-Butyl, Pentyl, Isopentyl, Neopentyl, tert.-Pentyl, Hexyl, 2-Methylpentyl, Heptyl, Octyl, 2-Ethylhexyl, Nonyl, Decyl, Undecyl, Dodecyl, Tridecyl, Tetradecyl, Pentadecyl, Hexadecyl, Heptadecyl, Octadecyl, Nonadecyl, Eicosyl, Heneicosyl und Docosyl sowie verzweigte Reste dieser Art, wobei die Alkylgruppen mit bis zu 12 C-Atomen bevorzugt und diejenigen mit bis zu 8 C-Atomen besonders bevorzugt sind.

Die genannten Alkylgruppen können Halogen wie Fluor, Chlor und Brom, Hydroxy, C₁-C₆-Alkoxy, Benzyloxy, C₁-C₆-Alkanoyl, C₁-C₆-Alkoxycarbonyl oder Phenyl als Substituenten tragen, die bevorzugt in ω-Stellung stehen. Dabei sind ω-Brom- und ω-Hydroxy-C₁-C₁₂-alkylgruppen besonders bevorzugt. Beispiele für diese Reste sind:
- Trifluor-, Trichlor- und Brommethyl, 2-Brom- und 1,1,1-Trifluorethyl, Heptafluorpropyl und 4-Brombutyl;
- 2-Hydroxyethyl, 2- und 3-Hydroxypropyl, 2- und 4-Hydroxybutyl, 5-Hydroxypentyl, 6-Hydroxyhexyl, 7-Hydroxyheptyl und 8-Hydroxyoctyl;
- 2-Methoxy-, 2-Ethoxy-, 2-Propoxy-, 2-Isopropoxy- und 2-Butoxyethyl, 2- und 3-Methoxy- und 2- und 3-Ethoxypropyl, 2- und 4-Ethoxy- und 2- und 4-Isopropoxybutyl, 5-Ethoxypentyl, 6-Ethoxyethyl und 4-Oxy-6-ethyldecyl;
- 2-Benzyloxyethyl und 3-Benzyloxypropyl;
- 2-Acetyl- und 2-Propionylethyl, 3-Acetyl- und 3-Propionylpropyl und 4-Acetyl- und 4-Propionylbutyl;
- Ethoxycarbonylmethyl, 2-Ethoxycarbonylethyl und 2- und 3-Methoxycarbonylpropyl;
- Benzyl und 2-Phenylethyl.

Im Fall des Restes R² kann die C-Kette der Alkylgruppen durch weitere Sauerstoffatome in Etherfunktion unterbrochen sein. C₁-C₆-Alkylgruppen enthalten dabei bevorzugt bis zu zwei, C₇-C₁₂-Alkylgruppen bis zu drei und C₁₃-C₂₂-Alkylgruppen bis zu fünf Sauerstoffatome in der Kette. Als Beispiele seien genannt:

3,6-Dioxahexyl, 3,6-Dioxaheptyl, 3,6-Dioxaoctyl, 3,6-Dioxadecyl, 3,6,9-Trioxadecyl und 3,6-Dioxa-7-phenylheptyl.

Als Reste R¹ oder R² weiterhin geeignet sind C₃-C₇-Cycloalkylgruppen, die Halogen, C₁-C₄-Alkyl oder C₁-C₄-Alkoxy als Substituenten tragen können. Dabei ist im Fall des Restes R² die Cyclopentylgruppe bevorzugt und die Cyclohexylgruppe besonders bevorzugt. Beispiele sind hier:

Cyclopropyl, Cyclobutyl, Cyclopentyl, Cyclohexyl, Cycloheptyl, 2,3-Dichlorcyclohexyl, 3- und 4-Methylcyclohexyl, 4-Ethylcyclohexyl und 4-Methoxycyclohexyl.

Besonders bevorzugter Rest R¹ oder R² ist die Phenylgruppe, die im Fall des Restes R² vorzugsweise unsubstituiert ist, aber auch Substituenten tragen kann wie C₁-C₆-Alkoxy, vor allem C₁-C₄-Alkoxy oder Cyano, daneben auch Halogen, Hydroxy, C₁-C₆-Alkyl, Carboxy, C₁-C₆-Alkoxycarbonyl oder Hydroxysulfonyl; beispielsweise seien genannt:

Phenyl, 2-Chlor- und 2,4-Dichlorphenyl, 4-Hydroxyphenyl, 2-Cyanophenyl, 2-Methylphenyl, 4-Methoxyphenyl, 4-Carboxyphenyl und 4-Hydroxysulfonylphenyl.

Als Rest R³ sind besonders bevorzugt Wasserstoff, Chlor, Brom und Methyl. Außerdem eignen sich die weiteren für die Reste R¹ oder R² aufgeführten C₁-C₆-Alkylgruppen.

Geeignete Anionen An^{⊖} können Anionen anorganischer oder organischer Säuren sein. Besonders bevorzugt sind dabei Chlorid, Bromid, Iodid, Tetrafluoroborat, Perchlorat und Hexafluorophosphat sowie 4-Methylphenylsulfonat. Außerdem geeignet sind z.B. Sulfat, Phosphat, Hexafluoroantimonat, Trichlorozinkat und Tetraphenylborat sowie Methyl- und Phenylsulfonat, Acetat, Lactat und Salicylat.

Weiterhin können als anorganische Anionen auch die Anionen von Heteropolysäuren, z.B. des Phosphors oder des Siliciums eingesetzt werden. Als Beispiele seien genannt: Molybdatophosphorsäure, Molybdatokieselsäure, Vanadatophosphorsäure, Vanadatokieselsäure, Wolframatophosphorsäure, Wolframatokieselsäure sowie Mischsäuren dieser Art.

Bekanntermaßen erfolgt die Herstellung dieser Heteropolysäuren oder ihrer Salze durch Ansäuern von Lösungen der Alkali- oder Ammoniummolybdate, -vanadate und/oder -wolframate in Gegenwart von wasserlöslichen Phosphaten und/oder Silicaten.

Als Anionen An^{⊖} kommen weiterhin neben Kupfer(I)-hexacyanoferrat(II) auch übergangsmetallchelat-Komplexe wie Nickeldithiolate in Frage.

Bevorzugte Indolizintrimethinfarbstoffe I sind den Beispielen zu entnehmen.

Methoden zur Herstellung von Indolizintrimethinen sind allgemein bekannt und beispielsweise in Advances in Heterocyclic Chemistry, 23, S. 104-167 (1978) beschrieben.

Die erfindungsgemäßen Indolizintrimethinfarbstoffe I können analog dargestellt werden, beispielsweise durch Kondensation von Indolizinderivaten der Formel II 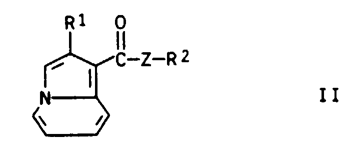 mit einer die Trimethingruppe =CH-C(R³)=CH- enthaltenden Verbindung der Formeln IIIa-IIIe

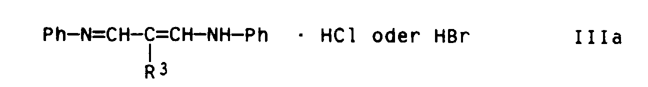

(H₃C)₂N^{⊕}=CH-CH=CH-N(CH₃)₂ · BF₄^{⊖} IIIb

(H₃CO)₂CH-CH₂-CH(OCH₃)₂ IIIc

(H₅C₂O)CH=CH-CH(OC₂H₅)₂ IIId

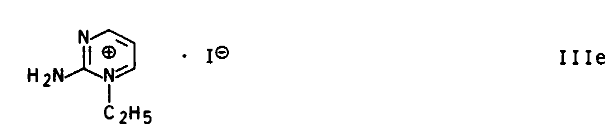

(dabei bedeutet Ph = Phenyl)

Die Umsetzung wird zweckmäßigerweise in einem inerten Lösungsmittel wie Acetanhydrid oder niederen Alkoholen, z.B. Methanol, Ethanol und Propanol, bei Temperaturen von 40 bis 140°C, besonders 80 bis 120°C durchgeführt.

Die Indolizinderivate II können nach den ebenfalls in Advances in Heterocyclic Chemistry 23, S. 104-167 (1978) beschriebenen Methoden hergestellt werden.

Die erfindungsgemäßen Indolizintrimethinfarbstoffe I weisen hohe Absorption im Wellenlängenbereich von 680 bis 700 nm auf. Außerdem sind sie in organischen Lösungsmitteln, insbesondere niederen Alkoholen, und thermoplastischen oder vernetzbaren Bindemitteln, wie sie für die Herstellung von optischen Aufzeichnungsmedien eingesetzt werden, sehr gut löslich. Sie können daher direkt ohne Schutzschicht auf Träger aus strukturierten Kunststoffen aufgeschleudert werden.

Die erfindungsgemäßen optischen Aufzeichnungsmedien bestehen aus einem Träger mit einer dünnen lichtabsorbierenden Schicht, die neben einem Farbstoff I auch Bindemittel enthalten kann.

Als Träger kommen zweckmäßig transparente Träger, wie Glas oder Kunststoffe in Betracht. Geeignete Kunststoffe sind beispielsweise Polyester, Epoxide, Polyolefine (z.B. Polymethylpenten), Polyamide, Polyvinylchlorid, Polystyrol und Polyvinylester, besonders Polyacrylate und Polymethacrylate sowie ganz besonders Polycarbonate.

Die lichtabsorbierende Schicht wird zweckmäßigerweise durch Aufschleudern einer Lösung eines erfindungsgemäßen Indolizintrimethinfarbstoffs I, die zusätzlich Bindemittel und weitere Additive wie Antioxidantien, Singulett-Sauerstoff-Quencher und UV-Absorber enthalten kann und in der Regel einen Farbstoffgehalt von 1 bis 30 Gew.-%, bezogen auf die Lösung, aufweist, auf den Träger aufgebracht und getrocknet.

Geeignete Lösungsmittel sind dabei z.B. Propanol, Isopropanol, Butanol, Diacetonalkohol, Methylethylketon, Toluol, Bromoform, 1,1,2-Trichlorethan und deren Mischungen.

Der Zusatz von Bindemitteln ist nicht unbedingt erforderlich, wird aber dennoch bevorzugt, um die Viskosität der aufzuschleudernden Lösung optimal einstellen zu können und um eine gute Langzeitstabilität der Aufzeichnungsmedien zu gewährleisten. Vorzugsweise werden 1 bis 30 Gew.-% Bindemittel, bezogen auf den Gehalt an gelöstem Feststoff, zugesetzt.

Als Bindemittel kommen z.B. Polyorganosiloxane, Epoxide, Polyacrylate und -methacrylate, Polystyrolhomo- und -copolymerisate, Polyvinylcarbazol, Polyvinylpyrrolidon, Polyimidazolcopolymere, Polyvinylestercopolymere, Polyvinylethercopolymere, Polyvinylidenchloridpolymere, Acrylnitrilcopolymere, Polyvinylchlorid und deren Copolymere, Celluloseacetat und Nitrocellulose in Betracht. Bevorzugt sind Bindemittel auf der Basis von Vinylpyrrolidon-Vinylacetat-Copolymeren und Polyvinylchlorid-Polyvinylether-Copolymeren.

In der Regel werden der Farbstofflösung von den oben genannten Additiven bis zu 10 Gew.-%, vorzugsweise bis zu 5 Gew.-%, bezogen auf den Gehalt an gelöstem Feststoff, zugesetzt. Von Antioxidantien, die ebenfalls im nahen Infrarot absorbieren, beispielsweise Nickelthiolenkomplexen, wie sie in der DE-A-35 05 750, DE-A-35 05 751 oder in Dyes and Pigments, Bd. 8, S. 381-388 (1987) beschrieben sind, können vorzugsweise bis zu 10 Gew.-%, bezogen auf den Gehalt der aufzuschleudernden Lösung an gelöstem Feststoff, in der Lösung enthalten sein.

Unter Aufschleudern ist dabei das Aufbringen der Lösung auf den in Rotation befindlichen Träger, der zweckmäßig eine runde Form aufweist, zu verstehen. Es ist aber auch möglich, die Lösung auf den zunächst ruhenden Träger aufzubringen und ihn anschließend in Rotation zu versetzen. Das Aufgeben auf den Träger erfolgt zweckmäßigerweise mit einer Spritze oder Kapillaren oder mittels einer mechanischen Pumpe.

Die Rotation des Trägers erfolgt im allgemeinen mit einer Geschwindigkeit von 5 bis 7000 U/min, vorzugsweise 500 bis 5000 U/min, wobei das Aufschleudern der Lösung zweckmäßig bei geringerer Drehzahl (ca. 500 bis 2000 U/min) und das daran anschließende Trockenschleudern bei höherer Drehzahl (ca. 5000 bis 7000 U/min) vorgenommen wird. Die Schichtdicke der gegenüber Laserlicht empfindlichen Schicht beträgt in der Regel 40 bis 160 nm, vorzugsweise 80 bis 120 nm. Sie ist abhängig von der Drehzahl, von der Konzentration und Viskosität der aufzuschleudernden Lösung sowie der Temperatur.

Bei den erfindungsgemäßen optischen Aufzeichnungsmedien liegt die gegenüber Laserlicht empfindliche Schicht in Form einer homogenen, dünnen, glatten Schicht vor, die eine hohe optische Qualität aufweist. So liegen die Reflektivitätswerte im allgemeinen in einem Bereich oberhalb von 15 %.

Die neuen Aufzeichnungsmedien sind ferner bei der Wellenlänge der kommerziell verwendeten Halbleiterlaser hinreichend empfindlich, d.h. bei Einstrahlung von Lichtpulsen von wenigen nJ Energiegehalt, die auf Brennpunktdurchmesser von ≤1 µm fokussiert sind, bilden sich Pits aus, wobei ein ausgezeichnetes Signal-Rausch-Verhalten erzielt wird.

### Beispiele

a) Herstellung von Indolizintrimethinfarbstoffen I

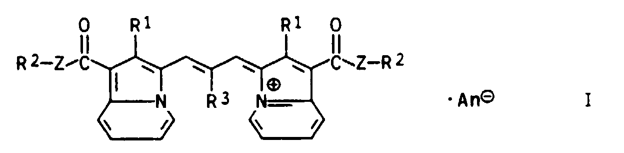

### Beispiel 1

Eine Mischung aus 3,5 g (10 mmol) 2-Phenyl-3-(N-butylcarbamoyl)-indolizin und 1,6 g (5 mmol) 1-Dimethylamino-3-dimethyliminopropen-1-tetrafluoroborat in 20 ml Acetanhydrid wurden unter Rühren für 30 min auf 100°C erhitzt.

Nach dem Abkühlen wurde die intensiv grünblau gefärbte Reaktionslösung unter Rühren in 300 ml Methyl-tert.-butylether eingetragen, wobei sich der Farbstoff I abschied. Er wurde abgetrennt, mehrmals mit Methyl-tert.-butylether gewaschen und durch Extraktion nach Soxhlett mit Methyl-tert.-butylether von Verunreinigungen befreit.

Es wurden 2,2 g des Farbstoffs 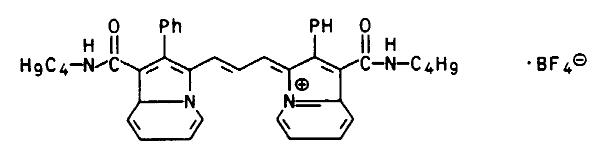 erhalten, was einer Ausbeute von 42% entspricht.

### Beispiele 2 bis 24

Auf analoge Weise zu Beispiel 1 wurden diese Farbstoffe durch Umsetzung einer Verbindung II mit einer Verbindung III in ähnlichen Ausbeuten hergestellt.

In der Tabelle sind die jeweiligen Farbstoffe I und ihre in Methylenchlorid oder Dimethylformamid (DMF) gemessenen Absorptionsmaxima λₘₐₓ [nm] aufgeführt.

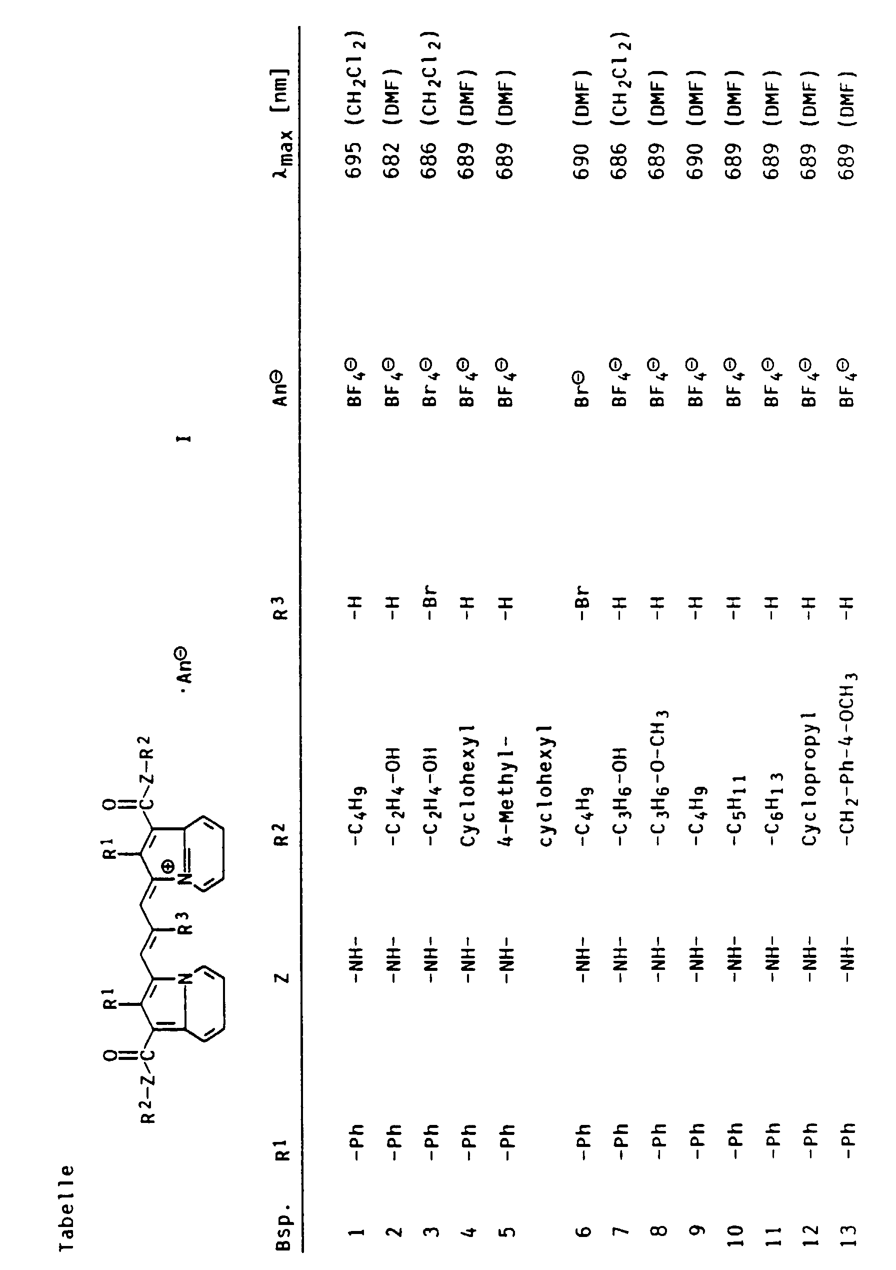

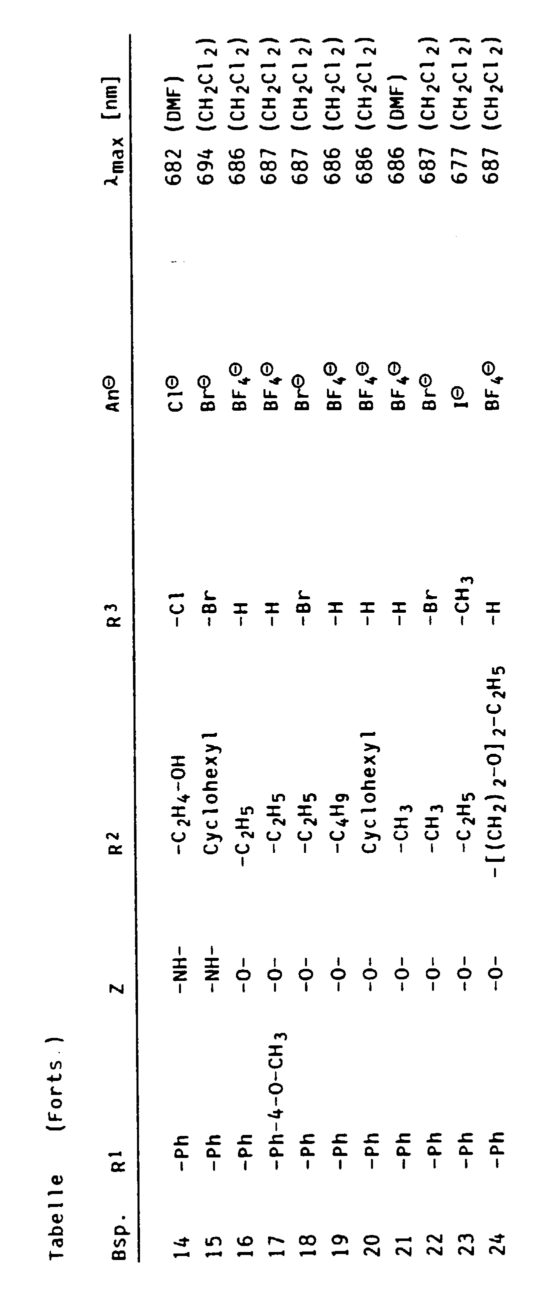

### b) Anwendungsbeispiele

### Beispiel 1

Eine 3 gew.-%ige Lösung des Farbstoffs aus Beispiel 2 in 1,1,2-Trichlorethan wurde bei 2000 U/min auf ein Polycarbonatsubstrat aufgeschleudert.

Die erhaltene Schicht war homogen und hochreflektierend. Sie ließ sich sehr gut mit einem Halbleiterlaser (780 nm) beschreiben. Die eingeschriebenen Informationen konnten bei gutem Signal/Rausch-Verhältnis wieder ausgelesen werden.

### Beispiel 2

Eine 3 gew.-%ige Lösung des Farbstoffs aus Beispiel 4 in Propanol/Diacetonalkohol (v/v 80 : 20), die, bezogen auf den Feststoffgehalt der Lösung, 5 Gew.-% 4-Octyl-4'-fluor-diphenyl-dithiolennickel als Stabilisator enthielt, wurde bei 2000 U/min auf eine rotierende Polycarbonatscheibe aufgeschleudert.

Die erhaltene homogene und hochreflektierende Schicht war sehr gut mit einem Halbleiterlaser beschreibbar und wies eine besonders hohe Stabilität gegenüber UV-Licht auf.

## Patentansprüche

1. Indolizintrimethinfarbstoffe der allgemeinen Formel I 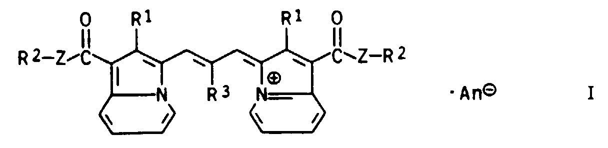 in welcher die Variablen folgende Bedeutung haben:
R¹ C₁-C₂₂-Alkylgruppen, die folgende Substituenten tragen können: Halogen, Hydroxy, C₁-C₆-Alkoxy, Benzyloxy, C₁-C₆-Alkanoyl, C₁-C₆-Alkoxycarbonyl oder Phenyl; C₃-C₇-Cycloalkylgruppen, die folgende Substituenten tragen können: Halogen, C₁-C₄-Alkyl oder C₁-C₄-Alkoxy; Phenylgruppen, die folgende Substituenten tragen können: Halogen, Hydroxy, Cyano, C₁-C₆-Alkyl, C₁-C₆-Alkoxy, Carboxy, C₁-C₆-Alkoxycarbonyl oder Hydroxysulfonyl;
R² einer der Reste R¹, wobei die C-Kette der C₁-C₂₂-Alkylgruppen durch ein bis fünf Sauerstoffatome in Etherfunktion unterbrochen sein kann;
R³ Wasserstoff, Halogen oder C₁-C₆-Alkyl;
Z -0- oder -NH-;
An^{⊖} das Äquivalent eines Säureanions.

2. Indolizintrimethinfarbstoffe der allgemeinen Formel I nach Anspruch 1, in welcher die Variablen folgende Bedeutung haben:
R¹ C₁-C₂₂-Alkylgruppen, ω-Brom- oder ω-Hydroxy-C₁-C₁₂-alkylgruppen;
eine Phenylgruppe, die folgende Substituenten tragen kann:
Halogen, Hydroxy, Cyano, C₁-C₄-Alkoxy, Carboxy, C₁-C₆-Alkoxycarbonyl oder Hydroxysulfonyl;
R² C₁-C₂₂-Alkylgruppen, deren C-Kette durch ein bis fünf Sauerstoffatome in Etherfunktion unterbrochen sein kann; ω-Brom- oder ω-Hydroxy-C₁-C₁₂-alkylgruppen; eine Cyclopentyl- oder Cyclohexylgruppe;
eine Phenylgruppe, die folgende Substituenten tragen kann:
Brom, Chlor, C₁-C₆-Alkyl oder C₁-C₆-Alkoxycarbonyl;
R³ Wasserstoff, Chlor, Brom oder C₁-C₆-Alkyl.

3. Indolizintrimethinfarbstoffe der allgemeinen Formel I nach Anspruch 1, in welcher die Variablen folgende Bedeutung haben:
R¹ eine Phenylgruppe, die Cyano oder C₁-C₄-Alkoxy als Substituenten tragen kann;
R² C₁-C₁₂-Alkylgruppen, deren C-Kette durch ein bis drei Sauerstoffatome in Etherfunktion unterbrochen sein kann;
ω-Brom- oder ω-Hydroxy-C₁-C₁₂-alkylgruppen;
eine Cyclohexyl- oder Phenylgruppe;
R³ Wasserstoff, Chlor, Brom oder Methyl.

4. Optische Aufzeichnungsmedien für die Aufzeichnung und Wiedergabe von Informationen mittels Laserstrahlen, enthaltend in der lichtempfindlichen Schicht einen Indolizintrimethinfarbstoff der Formel I gemäß den Ansprüchen 1 bis 3.

## Claims

1. An indolizinetrimethine dye of the general formula I 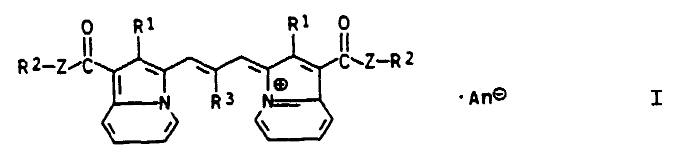 where the variables are defined as follows:
R¹ is C₁-C₂₂-alkyl which may be substituted by halogen, hydroxyl, C₁-C₆-alkoxy, benzyloxy, C₁-C₆-alkanoyl, C₁-C₆-alkoxycarbonyl or phenyl,
C₃-C₇-cycloalkyl, which may be substituted by halogen, C₁-C₄-alkyl or C₁-C₄-alkoxy, or phenyl which may be substituted by halogen, hydroxyl, cyano, C₁-C₆-alkyl, C₁-C₆-alkoxy, carboxyl, C₁-C₆-alkoxycarbonyl or hydroxysulfonyl,
R² has one of the meanings of R¹, except that the carbon chain of C₁-C₂₂-alkyl may be interrupted by from one to five oxygen atoms in ether function,
R³ is hydrogen, halogen or C₁-C₆-alkyl,
Z is -O- or -NH-, and
An^{⊖} is the equivalent of an acid anion.

2. An indolizinetrimethine dye of the general formula I as claimed in claim 1, where the variables are defined as follows:
R¹ is C₁-C₂₂-alkyl, ω-bromo- or ω-hydroxy-C₁-C₁₂-alkyl, or
phenyl which may be substituted by halogen, hydroxyl, cyano, C₁-C₄-alkoxy, carboxyl, C₁-C₆-alkoxycarbonyl or hydroxysulfonyl,
R² is C₁-C₂₂-alkyl whose carbon chain may be interrupted by from one to five oxygen atoms in ether function, ω-bromo- or ω-hydroxy-C₁-C₁₂-alkyl,
cyclopentyl, cyclohexyl, or
phenyl which may be substituted by bromine, chlorine, C₁-C₆-alkyl or C₁-C₆-alkoxycarbonyl, and
R³ is hydrogen, chlorine, bromine or C₁-C₆-alkyl.

3. An indolizinetrimethine dye of the general formula I as claimed in claim 1, where the variables are defined as follows:
R¹ is phenyl which may be substituted by cyano or C₁-C₄-alkoxy,
R² is C₁-C₁₂-alkyl whose carbon chain may be interrupted by from one to three oxygen atoms in ether function, ω-bromo- or ω-hydroxy-C₁-C₁₂-alkyl, cyclohexyl or phenyl, and
R³ is hydrogen, chlorine, bromine or methyl.

4. An optical recording medium for recording and reproducing information items by means of laser beams, comprising in the light-sensitive layer an indolizinetrimethine dye of the formula I as claimed in claim 1 or 2 or 3.

## Revendications

1. Colorants de la famille des indolizinetriméthines de formule générale I 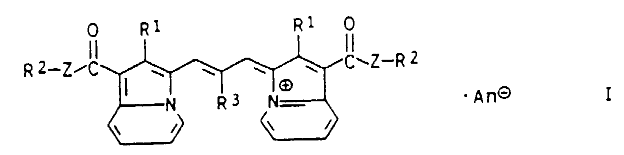 dans laquelle les variables ont les significations suivantes:
R¹ groupements alkyle en C₁-C₂₂ qui peuvent porter les substituants suivants: atomes d'halogène, restes hydroxy, alcoxy en C₁-C₆, benzyloxy, alcanoyle en C₁-C₆, (alcoxy en C₁-C₆)carbonyle ou phényle; groupements cycloalkyle en C₃-C₇ qui peuvent porter les substituants suivants: atomes d'halogène restes alkyle en C₁-C₄ ou alcoxy en C₁-C₄; groupements phényle qui peuvent porter les substituants suivants: atomes d'halogène, restes hydroxy, cyano, alkyle en C₁-C₆, alcoxy en C₁-C₆, carboxy, (alcoxy en C₁-C₆)carbonyle ou hydroxysulfonyle;
R² l'un des restes R¹, la chaîne carbonée des groupements alkyle en C₁-C₂₂ pouvant être interrompue par un à cinq atomes d'oxygène en fonction éther;
R³ atome d'hydrogène, d'halogène ou groupement alkyle en C₁-C₆;
Z -O- ou -NH-;
An^{⊖} l'équivalent d'un anion acide.

2. Colorants de la famille des indolizinetriméthines de formule générale I selon la revendication 1, dans laquelle les variables ont les significations suivantes:
R¹ groupements alkyle en C₁-C₂₂, groupements ω-bromo- ou ω-hydroxyalkyle en C₁-C₁₂;
groupements phényle qui peuvent porter les substituants suivants:
atomes d'halogène, restes hydroxy, cyano, alcoxy en C₁-C₄, carboxy, (alcoxy en C₁-C₆)carbonyle ou hydroxysulfonyle;
R² groupements alkyle en C₁-C₂₂ dont la chaîne carbonée peut être interrompue par un à cinq atomes d'oxygène en fonction éther; groupements ω-bromo- ou ω-hydroxyalkyle en C₁-C₁₂;
groupement cyclopentyle ou cyclohexyle;
groupement phényle qui peut porter les substituants suivants:
atomes de brome, de chlore, restes alkyle en C₁-C₆ ou (alcoxy en C₁-C₆)carbonyle;
R³ atome d'hydrogène, de chlore, de brome ou groupement alkyle en C₁-C₆.

3. Colorants de la famille des indolizinetriméthines de formule générale I selon la revendication 1, dans laquelle les variables ont les significations suivantes:
R¹ groupements phényle qui peuvent porter des restes cyano ou alcoxy en C₁-C₄ comme substituants;
R² groupements alkyle en C₁-C₁₂ dont la chaîne carbonée peut être interrompue par un à trois atomes d'oxygène en fonction éther;
groupements ω-bromo- ou ω-hydroxy-alkyle en C₁-C₁₂; groupement cyclohexyle ou phényle;
R³ atome d'hydrogène, de chlore, de brome ou groupement méthyle.

4. Supports d'enregistrement optique pour l'enregistrement et la reproduction d'informations au moyen de rayons laser, contenant, dans la couche photosensible, un colorant de la famille des indolizinetriméthines de formule I selon l'une quelconque des revendications 1 à 3.
